# EUROPEAN PATENT APPLICATION

(11) **EP 1 158 395 A2**
(43) Date of publication of application: **28.11.2001**
(21) Application number: 00120458.5
(22) Date of filing: 19.09.2000
(51) Int. Cl.: G06F 3/06

(54) **Data storage system and hierarchical management control method**

(30) Priority: 24.05.2000 JP 2000157962
(71) Applicant: Hitachi, Ltd., Chiyoda-ku, Tokyo 101-8010 (JP)
(72) Inventor: Murotani, Akira, Hitachi, Ltd., Intell. Prop. Grp., Chiyoda-ku, Tokyo 100-8220 (JP); Nakano, Toshio, Hitachi, Ltd., Intell. Prop. Grp., Chiyoda-ku, Tokyo 100-8220 (JP); Shimada, Akinobu, Hitachi,Ltd., Intell. Prop. Grp., Chiyoda-ku, Tokyo 100-8220 (JP)
(74) Representative: Strehl Schübel-Hopf & Partner

(57) **Abstract**

The method of selecting the logical volumes which are the objects of the data transferring migration to equilibrate the load to the system based on the accessing data to the physical drives and the logical drives under the disk array controllers without increasing the load to the management in the disk array controller, wherein the external manager communicates with two or more disk array controllers, gathers and manages the accessing data and the configuration data regarding to the physical drives and the logical volumes of each disk array controller, and prepares the optimum data transferring migration instruction to equilibrate the access load.

## Description

### BACKGROUND OF THE INVENTION

### 1. Field of the Invention

The present invention relates to storage units, and especially to data transferring migration, the method and the storage unit to control a hierarchical management control with the data transferring migration in order to keep balance of performance.

### 2. Description of the Prior Art

In a conventional hierarchical control system, as is disclosed in the JP-A-9-44381, a controller executes the data transferring migration of frequently accessed data to a storage unit having a high access speed and infrequently accessed data to a storage unit having a low access speed based on access frequency data managed inside the controller.

### SUMMARY OF THE INVENTION

In a system which is typically a Storage Area Network (SAN), in which a plurality of applications in one or more host units share volume groups, the volume groups of which the applications on the host units execute input and output extend over two or more controllers.

Conventional hierarchical control system assigns volumes to a high-speed storage pool in sequence of the higher order of reference value, which is based on the activity rate of the volumes in the unit of controllers.

Therefore, if there is a volume having higher reference value than that of the volume of a specific application under a controller, the transferring of the application is preceded so that, as the result of it, there may be cases where a performance bottleneck of the specific application cannot be resolved. That is, there are cases where data transferring migrations without contributing to performance improvement are executed, but the data transferring migrations contributing to the performance improvement are not executed.

In addition, since the controllers cannot share the information of volumes which are to be executed with the data transferring migration in precedence, the data transferring migration of the volume accessed by the specific application cannot be preceded.

The conventional hierarchical control system assigns the volumes to the high-speed storage pool in sequence of higher reference values, which are based on activity rate per unit time in the volumes under the controller.

Some applications show quite different accessing patterns depending on time zones. However, by the difficulty of discrimination between the volumes having a high activity rate continuously and the volumes causing a large performance bottleneck at a specific time period by the concentration of accessing but having a low activity rate in an average for a long period, there exists the problem of inefficiency which is to execute the transferring of the volumes without the necessity of the data transferring migration.

This problem can be avoided by acquiring and storing access data at very short period; however, data acquisition at very short period in a disk array controller will cause the increase of load to the controller disturbing the load equilibrium and the performance improvement of a total system.

As a system of acquiring volume information at short period without increasing the load to the total system, there is a software storing and displaying the access data such as activity rate of the volumes communicating with the controller. However, since this software by itself can neither acquire the corresponding structure of logical volumes and physical drives, the activity rate of the physical drives, the limit performance of volumes depending on accessing modes, and etc., which are necessary for the hierarchical management control nor instruct the controller the migration automatically, it cannot plan the migration to precisely equilibrate the load to the total system.

The objective of the present invention is to provide a system to execute a data transferring migration having better performance and a method thereof, when the volumes of a same application are arranged extending over two or more controllers.

Another objective of the present invention is to provide a system executing the data transferring migration of the volume of a specific application in precedence and a method thereof, when the volumes of a same application are arranged extending over two or more controllers.

Furthermore, another objective of the present invention is to provide a system acquiring volume information of a short period without increasing the load to the total system and instructing the controller the migration automatically and a method thereof.

A storage system being configured extending over two or more controllers accessed by two or more applications on host unit communicates with two or more controllers, and is provided with a means (external manager, etc.) having the functions of gathering, accumulating and managing the activity rate of each physical drive constituting logical volumes, the activity rate of the logical volumes, access pattern, performance information and the configuration information of the correlation between the physical drives and the logical volumes.

The external manager generates a data transferring migration instruction by utilizing the accumulated information, and an application priority condition and a priority period condition being input to equilibrate accessing load and issues the instruction to the controller.

Since the external manager treats all volumes, which will be the performance bottleneck of the highest priority application to be migration objects, efficient performance improvement can be enabled by executing the data transferring migration of the volume group accessed by the specific application intensively among the disk array unit groups accessed by two or more applications. Further, since the external manager does not execute the migration on the application with which the performance improvement by the data transferring migration cannot be attained as the performance bottleneck of a part of the volumes cannot be solved, the resource of a high speed storage pool will not be consumed uselessly and further efficient performance improvement is enabled.

### BRIEF DESCRIPTION OF THE DRAWINGS

FIG. 1 is a block diagram showing the system configuration of a preferred embodiment of the present invention.
FIG. 2 is a table showing an example of holding I/O information on an external manager, which the preferred embodiment of the present invention requires.
FIG. 3 is a flow chart showing a sequence of processing on the external manager, which shows the selection technique of an object logical volume.
FIG. 4 is a flow chart showing the sequence of processing for deciding the execution of data transferring migration with each application.
FIG. 5 is a block diagram showing the system configuration of using time serics data for the selection of the logical volume, which is the object of data transferring migration.
FIG. 6 is a flow chart showing a sequence of processing on the external manager for describing performance function.

### DETAILED DESCRIPTION OF THE INVENTION

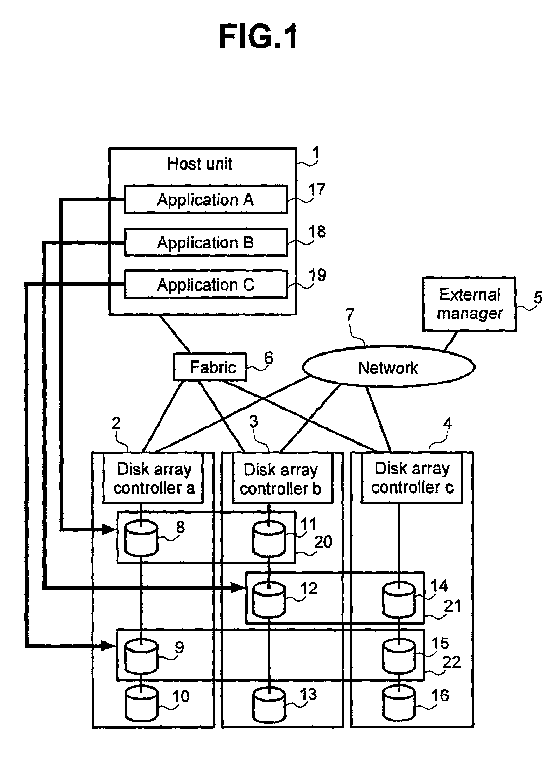

A system configuration is described referring to FIG. 1 with an example of the performance tuning executed by the migration of a portion of logical volume data to a high speed storage pool when a host unit is accessing the logical volumes of two or more disk array units in a system comprising the host unit, two or more disk array controllers, and an external manager.

The host unit 1 executing two or more applications and the disk array controllers 2, 3 and 4 are connected by a Fabric Switch 6 through Fibre Channel. The disk array controllers 2, 3 and 4 arc connected to the external manager 5 which gathers accessing state (in the preferred embodiment of the present invention, accessing data of the number of reading /writing from each application at a predetermined time period [for example, 24 hours]) through a network 7. As a method for the external manager 5 to obtain access data, there will be the method of gathering the access data managed by each controller from each of the controllers. Installing place of the external manager 5 can be either a place separated from the disk array controllers 2, 3 and 4 and where a system administrator is stationed, or built in a same cabinet with the disk array controllers 2, 3 and 4.

The disk array controller 2 controls logical volumes 8, 9 and 10, the disk array controller 3 controls logical volumes 11, 12 and 13 and the disk array controller 4 controls logical volumes 14, 15 and 16.

Among the processing of the host unit 1, an application A 17 accesses a logical volume group 20 comprising the logical volumes 8 and 11 structured with RAID level 5, an application B 18 accesses a logical volume group 21 comprising the logical volumes 12 and 14 structured with RAID level 5, and an application C 19 accesses a logical volume group 22 comprising the logical volumes 9 and 15.

Each of the logical volumes 8, 9, 10, 11, 12, 13, 14, 15 and 16 comprises two or more physical disks and the capacity of the logical volume is the same.

Each of the logical volumes 10, 13 and 16 is the high speed storage pool structured with RAID level 1 and is not accessed from the host unit 1.

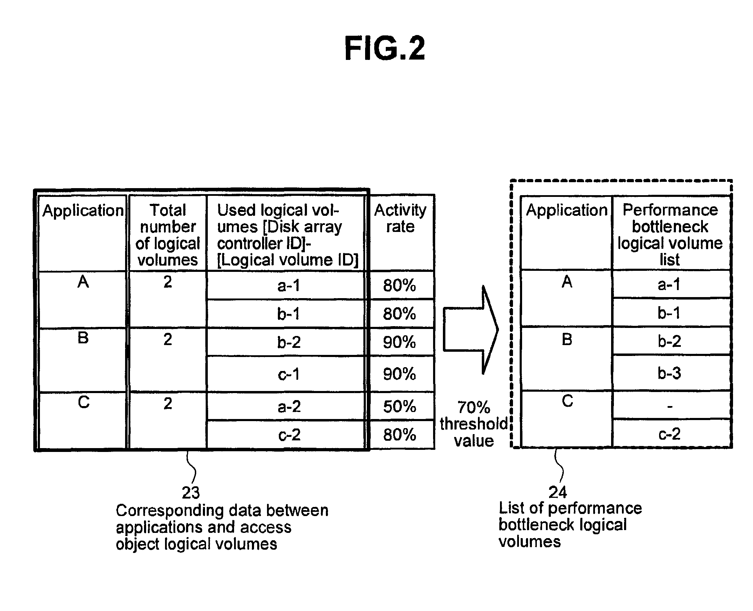

The external manager 5 holds the corresponding information of the applications 17 to 19 on the host unit 1, the logical volumes which arc the accessing object of the applications, and the disk array controllers 2 to 4 controlling the logical volumes. An example of the method of the holding by a table form is shown by 23 of FIG. 2. In the example shown in FIG. 2, the logical volume 8 accessed by the application A 17 is held being added with a code "a-1" which means a first logical volume of the disk array controller 2 specified by an ID of "a".

The corresponding information is acquired by user inputs to the external manager, but also can be obtained from the communications between the host unit and the external manager, Fabric and the communications between the management console of the Fabric and the external manager, or can be acquired automatically.

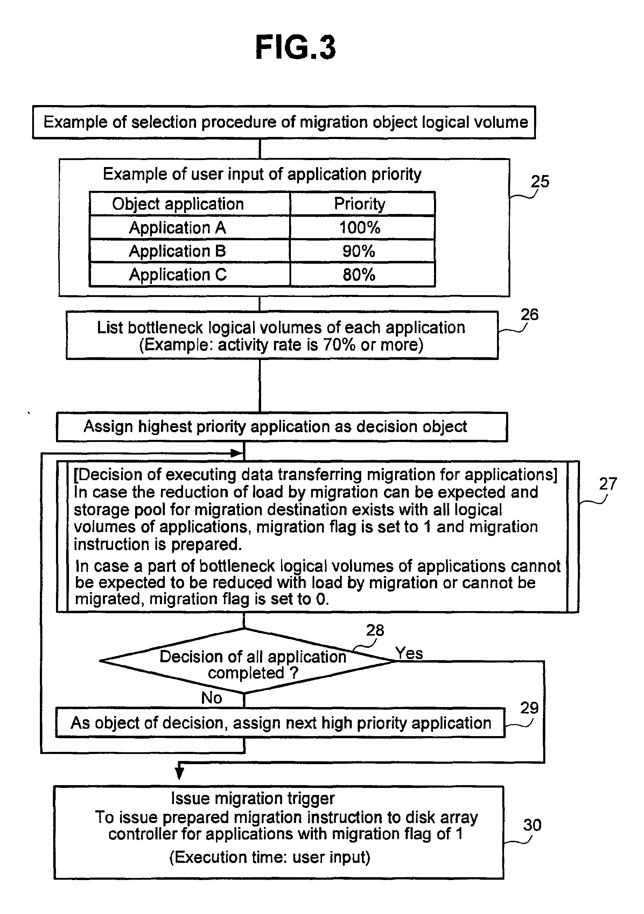

The following is the explanation of the procedure of the external manager selecting logical volume of the migration object referring to FIG. 3.

In step 25, a user assigns to the external manager an application to improve the performance by the data transferring migration with the priority by percentage. In the example of FIG. 3, the priority is assigned as the application A 17 is with the priority of 100%, the application B 18 is with the priority of 90%, and the application C 19 is with the priority of 70%.

In step 26, the external manager sorts the activity rate of the logical volumes regarding to the accessing object volumes held as the corresponding information 23 in FIG. 2 and specifies one or more logical volumes considered to be performance bottleneck owing to a high activity rate. In the example of FIG. 2, the logical volumes, of which activity rates exceed the threshold value of 70 %, are specified as the performance bottlenecks and the information is held by listing shown in 24 of FIG. 2.

In the processing flow of steps 27 to 29, the external manager works out the decision index of executing the data transferring migration on each application in sequence of the applications having higher priorities.

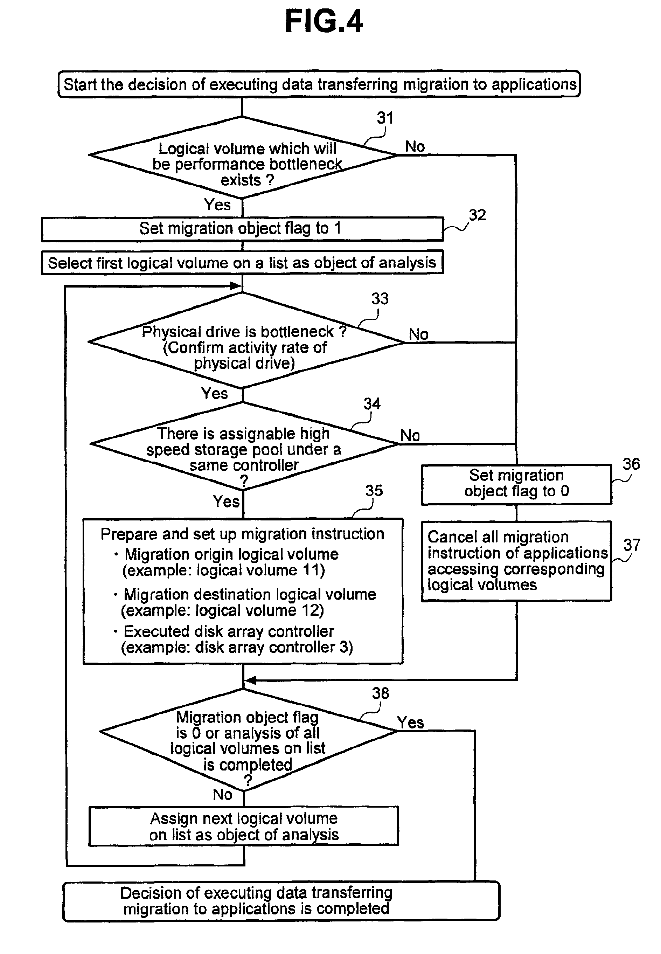

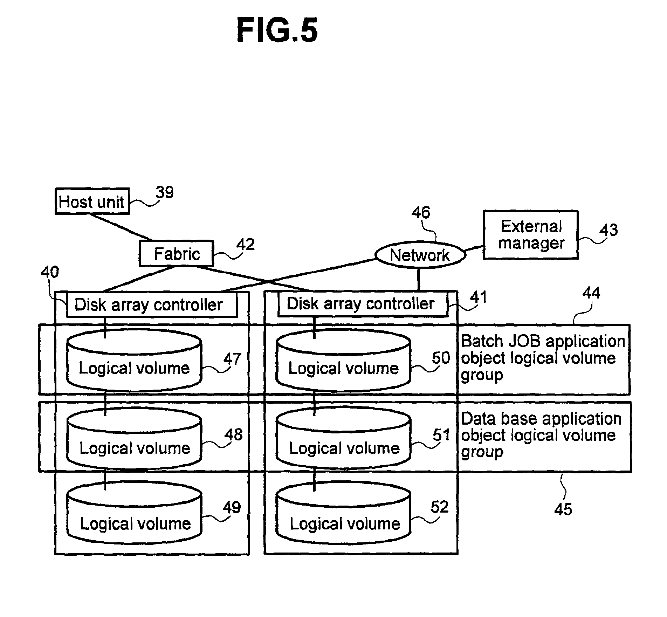

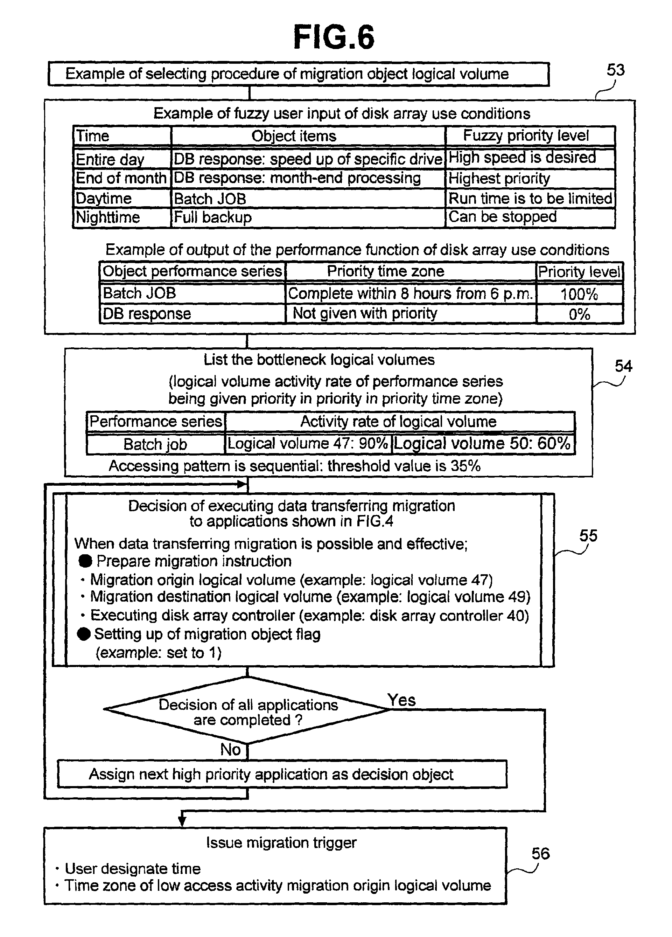

The execution decision shown in the step 27 is worked out by the analysis of the logical volume which will be the performance bottleneck shown in FIG. 4.

In step 31 of FIG. 4, the external manger 5, at first, refers to the list of the logical volume which will be the performance bottleneck with each application selected at the step 26 of FIG. 3 and sets a migration object flag, which is the decision index of the step 27 of FIG. 3, to 1 at step 32 if there is at least one logical volume in the list. Then, the external manager 5 confirms at step 33 that the cause of the bottleneck is the bottleneck of the physical drive and the load can be equilibrated by the data transferring migration with each logical volume registered to the bottleneck logical volume list with each application, confirms at step 34 that there is resource in the high speed storage pool which is the destination of the data transferring migration and it has not been assigned as the destination of the data transferring migration of other high priority application, and prepares the data transferring migration instruction at the step 34. As shown in step 38, the external manager completes the analysis of the logical volumes of the application after executing analytical processing of the steps 32 to 35 on all logical volumes on the list

In case that logical volumes which are the performance bottleneck cannot be specified at the step 31 or load on any logical volume on the list cannot be equilibrated by the data transferring migration at the steps 32 and 33, the external manager sets at step 36 the migration object flag which is the decision index at the step 27 of FIG. 3 to "0", releases the high speed storage pool assigned to the application at step 37, and completes the analysis of the logical volumes on the application.

Finally, at the step 28 of FIG. 3, the external manager 5 issues the data transferring migration instruction prepared at the step 35 of FIG. 4 as a migration trigger to the application, wherein the migration object flag is set to "1" at the user designated time.

In case of the example of FIG, 2, since the application A 17 has the highest priority, the logical volume 8 indicated as "a-1" and the logical volume 11 indicated as "b-1" are selected by the analysis in FIG. 4, the high speed storage pool 10 is assigned to the logical volume 8, and the high speed storage pool 13 is assigned to the logical volume 11.

For the application B 18, the logical volume 12 indicated as "b-2" and the logical volume 14 indicated as "c-1" are the objects of the data transferring migration. However, since the disk array controller 8 controlling the logical volume 12 does not have the high speed storage pool already, the application B 18 does not execute the data transferring migration.

In comparison to that the conventional hierarchical control system selecting the logical volume 12 and the logical volume 14 to which the application B accesses as the performance bottleneck volumes based on the activity rate of the volumes managed with each of the disk array controllers, the system of the present invention selects the logical volume 11 and the logical volume 13 which are the performance bottleneck of the application A 17 which has the priority of performance improvement, Therefore, the efficient data transferring migration which will match the user input can be planned.

According to the system of the present invention, since the data transferring migration of the application B 18 is not executed, the high speed storage pool of the controller 4 has a redundancy. Therefore, the data transferring migration can be executed to the logical volume 15 indicated as "c-2" which is the performance bottleneck logical volume of the application C 19 and a more efficient migration can be executed.

The operation of the disk array controller 2 which receives the migration trigger is described referring to FIG. 1.

By assigning the logical volume 13 as the mirroring volume of the logical volume 11, the disk array controller 2 copies the data of the logical volume 11 to the logical volume 13 while executing the access of the host unit 1 to the logical volume 11. While the copy is completed and the host unit 1 continues the accessing to the logical volume 11 and the logical volume 13 inside the disk array controller 2, the disk array controller 2 releases the mirroring described above. At this moment, the host unit 1 moves the accessing destination logical volumes and accessing destination Link information comprising accompanying management information from the logical volume 11 to the logical volume 13. Therefore, since the accessing destination Link information of the host unit 1 is taken up by the logical volume 13, the data transferring migration can be executed without interrupting the host unit 1 from executing the accessing, the volume ID of the logical volume 11 is taken up by the logical volume 13, and the host unit 1 is not required to change the access destination logical volume before and after the migration, the system of the present invention can realize the transparent migration.

It is described that the more effective data transferring migration for the improvement of the performance can be planned by using time-series data on the external manager 5 in the selection of the migration object logical volume.

The external manager 5 gathers the accessing data which will be the index of migration periodically and for long period. For example, the activity rates are gathered every 10 minutes for one year on all physical drives and all logical volumes.

The system acqiring the accessing data at the short period of every 10 minutes can grasp easily the occurrence of an instantaneous and a large amount of accesses, which will be the cause of the deterioration of the performance, and has a merit of enabling to rule out the efficient logical volumes of which average load is higher but which are not the performance bottleneck from the objects of the migration in comparison with the system acquiring the accessing data at the long period of every day, etc. The long term accessing data acquisition enables the migration planning corresponding to the variation of the volume load by the shift of time and the grasp of gradually increasing processing time of routine processing.

For the acquisition of the accessing data at the short period and for long period, the load to the disk array controller is high affecting the accessing performance in the hardware hierarchical management control system; however, the load to the disk array controller is not large in the hierarchical management control system of the present invention.

The following is the explanation of the examples of procedures of the external manager 43 to select the logical volumes of the object of the data transferring migration using the time-series data referring to FIG. 5 and FIG. 6. In the preferred embodiment of the present invention, the accessing data indicates mainly the number of reading/writing from each application within a predetermined time shorter than those of the previous examples of the preferred embodiment of the present invention. Specific predetermined time will be given later.

In FIG. 5, a host unit 39 executing a plurality of processing and disc array controllers 40 and 41 arc connected by a Fabric Switch 42 through a Fibre Channel, and the disk array controllers 40 and 41 are connected to the external manager 43 gathering the accessing data through a network 46.

The disk array controller 40 controls the logical volumes 47, 48 and 49, and the disk array controller 41 controls the logical volumes 50, 51 and 52. The host unit 39 executes the access of batch JOB application to the logical volume group 44 comprising the logical volumes 47 and 50 constructed with the RAID level 5 and executes the access of database application to the logical volume group 55 comprising the logical volumes 48 and 51 constructed with the RAID level 5.

Each of the logical volumes 49 and 52 is the high speed storage pool constructed with the RAID level 1 and is not accessed from the host unit 39.

Each of the logical volumes 47, 48, 49, 50, 51 and 52 comprises two or more physical disks and has the same capacity as the logical volume.

The external manager 43 holds the corresponding information of the applications on the host unit and the logical volume groups which are the accessing objects of the applications. Further, the external manager 43 gathers the accessing data which is the index of the migration periodically and for long period.

At Step 53 of FIG. 6, a user fuzzily inputs the priority to the external manager 5 for each application, for the performance series of the applications and for the run time of the applications. The external manager selects one or more of the performance series and applications which are the object of the migration based on the performance function and gives the priority level to them.

In the example of FIG. 6, the external manager gives the priority of 100 % to the batch JOB of 18:00 to 2:00.

Then, at step 54, the external manager 43 specifies the logical volume having high activity rate and considered to be the bottleneck by sorting the activity rates of the logical volumes which are the objects of the analysis and the accumulated data such as the random characteristic of access addresses. In the example of FIG. 6, using as objects the batch JOB selected at the step 53 and estimating the threshold level of the activity rate to be 85 % as the performance series is sequential, the logical volume 47 exceeding the threshold level regarding to the objects of the logical volumc inside the logical volume group 44 which is the accessing object of the batch JOB application is specified as the performance bottleneck volume.

Generally, since the deflection of the access load occurs between the logical volume 47 and the logical volume 50 belonging to the logical volume group 44, the load among the logical volumes can be equilibrated and the accessing speed to the logical volume group 44 can be improved by migrating the bottleneck logical volume 47 to the high speed storage pool of the disk array controller 40.

Then, the external manager 43 executes the sequence shown in FIG. 4 at step 55 to the logical volume which will be the boetleneck specified at the step 54, decides whether to execute the data transferring migration to the batch JOB, sets up the migration object flag, and prepares the migration instruction.

In the example of FIG. 6, since the batch JOB is the highest priority application and the high speed storage pool logical volume 49 can be assigned for the logical volume 47, which will be the bottleneck, as the destination of the data transferring migration, the migration object flag for the batch JOB is set to "1".

The external manager, which executed the decision of the data transferring migration to all applications at the step 55, issues at step 56 the migration instruction prepared at the step 55 as the migration trigger to the applications with the migration object flag of "1". Timing of generating the trigger can be either the user defined time or can be selected from the time zone of less access to the corresponding volume based on the time analysis shown at the step 53.

The disk array controller 40 which receives the trigger executes the data transferring migration from the logical volume 47 to the logical volume 49, can realize the access load equilibration to the logical volume group 44 by reducing the load to the logical volume 47, and can improve the performance.

The system to instruct and to execute the data transferring migration which is more convenient for the users can be provided if the access state of the present invention is decided not only based on the information of the time zone shown in the preferred embodiments of the present invention described above, but also by adding other elements which decides the usage state of the recording medium, such as frequency comparison of the sequential or the random accessing.

According to the present invention, in the system, typically the Storage Area Network, in which two or more/different kinds of host units share two or more disk array units and an external manager connected to each disk array unit gathers accessing data from the host units to the physical drives and the logical volumes inside the disk array unit, performance tuning by sophisticated and complicated reassignment of the logical volumes can be provided without increasing the load to the disk array controller, since the external manager selects the logical volume groups which are the objects of reassignment and logical volume groups which are the destinations of reassignment and instructs the migration to the disk array controllers by fuzzily assigning on the external manager the performance series and the time zone where the increase of the access speed of the host units is expected.

## Claims

1. A data storage system comprising:
a plurality of data storage units, each unit having a plurality of volumes storing data and a performance. monitor monitoring the performance of said each volume, and
a manager having a performance manager keeping an information relating to said data, the data storage unit which stores said data, and the volume which stores said data, and performance gathering means gathering performance information from said each data storage unit.

2. The system of claim 1, wherein
said data storage unit further comprises data transferring means transferring data from a volume of said data storage unit to a volume of another data storage unit and
said manager further comprises transfer instructing means instructing the transfer of said data to said data transferring means based on said performance information.

3. The system of claim 2, wherein said data storage unit comprises a disk controller and a plurality of disk storage units, said disk controller having said performance monitor and said data transferring means, and said disk storage unit having said volumes.

4. The system of claim 3, wherein said data transferring part comprises
a cache,
a disk adapter which is an interface with said disk storage unit,
a channel adapter executing data communication with other of said data storage units,
a manager interface which is an interface with said manager, and
a network connecting said cache, said disk adapter, said channel adapter, and said manager interface,
wherein, when said data transferring means accepts a transfer instruction from said manager through said manager interface, said data transferring means reads out said data from the instructed volume in said disk storage unit using said disk adapter, stores said data into said cache, and executes sending said data from said cache through said channel adapter.

5. The system of claim 4, wherein said data transferring means transmits a volume identifying ID to said another data storage unit through said channel adapter.

6. The system of claim 2, wherein
said manager holds a predetermined value, and
said data transfer instructing means instructs a data transfer when the value of said performance information gathered by said performance gathering means exceeds said predetermined value.

7. A method of transferring data in a data storage system storing data distributively in a plurality of data storage units, comprising
storing said data in a plurality of volumes of a plurality of data storage units,
monitoring the performance of each volume,
keeping allocation information relating to said data, said data storage system which stores said data, and said volumes which store said data,
gathering said performance information from each data storage unit,
deciding the data transfer of: the volume based on said performance information and said allocation information,
instructing said data transfer to the data storage unit, and
transferring the data of said volume to a volume of another data storage unit.

8. The method of claim 7, wherein said data storage unit comprises a disk controller connected with a host unit and a disk storage unit having two or more volumes to store data separately.

9. The method of claim 8, wherein a volume identifying ID is transmitted from said disk controller executing data transfer to said another data storage unit.

10. The method of claim 9, further comprising
keeping said predetermined value,
comparing the performance of each volume gathered from each of said disk array units with said predetermined value, and
instructing a data transfer if the value of said performance information is larger than said predetermined value.

11. The invention of claim 6 or 10, wherein both said performance information and said predetermined value are frequency of access to the volume concerned.
